# FASCICULE DE BREVET EUROPEEN

(11) **EP 2 552 715 B1**
(45) Date de publication et mention de la délivrance du brevet: **16.07.2014**
(21) Numéro de dépôt: 11708869.0
(22) Date de dépôt: 17.03.2011
(51) Int. Cl.: B60C 11/12

(54) **BANDE ROULEMENT DE PNEU COMPORTANT DES INCISIONS**
REIFENPROFIL MIT EINSCHNITTEN
TYRE TREAD HAVING INCISIONS

(30) Priorité: 31.03.2010 FR 1052392
(43) Date de publication de la demande: 06.02.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PALGEN, Marie-Claude, F-63200 Riom (FR)
(74) Mandataire: Diernaz, Christian
(86) Numéro de dépôt international: PCT/EP2011/054065
(87) Numéro de publication internationale: WO 2011/120817

(56) Documents cités:
- EP-A1- 0 378 090
- EP-A2- 1 029 714
- JP-A- 9 272 312

## Description

### DOMAINE DE L'INVENTION

La présente invention concerne les bandes de roulement de pneu et notamment les incisions dont sont pourvues ces bandes. Elle concerne également les éléments employés pour mouler de telles incisions.

### ÉTAT DE LA TECHNIQUE

Il est connu de pourvoir une bande de roulement d'un pneu destiné à équiper un véhicule de tourisme ou un véhicule poids lourd avec une pluralité d'incisions de façon à générer un grand nombre d'arêtes de matière sans toutefois réduire trop la rigidité de la bande de roulement et sans trop augmenter le taux de creux de cette bande.

En roulage, la bande de roulement s'use et en conséquence la hauteur des éléments de relief diminue ce qui se traduit par une augmentation de leur rigidité. Il a été proposé dans le brevet EP-0378090-B1 de pourvoir ces bandes avec des incisions se dédoublant à partir d'une profondeur prédéterminée.

Le document EP 1029714-A1 décrit une variante selon laquelle à partir d'une profondeur déterminée, une incision se divise en parties d'incision s'écartant de manière alternée par rapport au plan moyen de l'incision. Dans ce cas, la longueur totale des arêtes générées par cette incision est identique à la longueur initiale générée par l'incision sur la surface de roulement de la bande à l'état neuf.

Le document JP11151914 décrit une incision qui après une profondeur déterminée se subdivise sur certaines régions en deux parties d'incisions s'écartant l'une de l'autre, ces deux parties d'incisions se rejoignant à au moins une de leurs extrémités à une incision elle même formée dans le prolongement de l'incision s'ouvrant sur la surface de roulement à l'état neuf. Dans ce dernier cas, si la longueur d'incision augmente à partir d'une profondeur déterminée, on constate une réduction sensible de la rigidité de l'élément de relief à l'intérieur duquel l'incision est formée.

### Définitions :

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière se faisant face et distantes l'une de l'autre d'une distance non nulle. Ce qui différencie une incision d'une rainure c'est la valeur prise par cette distance ; dans le cas d'une incision, cette distance est appropriée pour permettre la mise en contact des parois opposées lors du passage dans le contact avec la chaussée. Cette distance pour une incision est ici au plus égale à 2 millimètres (mm). Dans le cas d'une rainure les parois de cette rainure ne peuvent pas venir en contact l'une contre l'autre dans les conditions usuelles de roulage.

La direction principale d'une incision correspond à la direction moyenne passant par les points les plus éloignés de l'incision sur la surface de roulement de la bande à l'état neuf non usé.

La direction secondaire est définie comme la direction perpendiculaire à la direction principale d'une incision et s'étendant dans l'épaisseur de la bande.

### BREF EXPOSÉ DE L'INVENTION

La présente invention vise à améliorer les performances des pneus que ce soit à l'état neuf en conférant à leur bande de roulement des rigidités appropriées et après usure partielle de la bande tout en retrouvant une longueur totale d'arêtes supérieure à la longueur d'arêtes à l'état neuf.

A cet effet, l'invention a pour objet une bande de roulement pour pneu, cette bande en matériau caoutchouc a une épaisseur E égale à la profondeur maximale des découpures et comprend une pluralité d'éléments de relief délimités par des découpures, chaque élément de relief comprenant une face de contact destinée à venir en contact avec la chaussée et des faces latérales coupant cette face de contact selon des arêtes, l'ensemble des faces de contact des éléments de relief formant une surface de roulement de la bande, au moins un de ces éléments de relief comprenant au moins une incision de profondeur maximale H au plus égale à l'épaisseur E de la bande, cette incision s'étendant selon une direction principale déterminée par les extrémités de la trace de l'incision sur la surface de roulement à l'état neuf et une direction secondaire s'étendant dans l'épaisseur de la bande, cette incision étant constituée par une première partie et une seconde partie, la première partie d'incision s'étendant selon la direction secondaire entre la surface de roulement à l'état neuf et une profondeur H1 au moins égale à 40% de la profondeur maximale H et la seconde partie d'incision prolongeant la première partie dans l'épaisseur de la bande, cette seconde partie s'étendant sur une profondeur H2. La première partie d'incision, de longueur totale L mesurée sur la surface de roulement à l'état neuf de la bande dans la direction principale, divise l'élément en relief sur la profondeur H1 en deux parties d'élément de relief disjointes l'une de l'autre puisque situées de part et d'autre de la première partie d'incision.

En outre, la seconde partie d'incision comprend, dans la direction principale de l'incision, au moins une première portion et au moins une deuxième portion, ces deux portions étant chacune de longueur inférieure à la longueur L, chaque première portion étant formée d'une incision comprenant au moins deux branches disjointes les unes des autres, ces au moins deux branches étant espacées l'une de l'autre d'une distance maximale D1, et chaque deuxième portion, située dans le prolongement d'une première portion dans la direction principale de l'incision et disjointe de toute première portion, étant formée de façon à créer une liaison mécanique entre les prolongements dans la profondeur sur la hauteur H2 des parties d'élément de relief disjointes l'une de l'autre entre la surface de roulement et la profondeur H1.

Grâce à l'invention, les deux parties d'élément de relief, disjointes l'une de l'autre par l'incision entre la surface de roulement à l'état neuf et une profondeur déterminée, sont reliées entre elles de part et d'autre de l'incision pour la partie terminale de cette incision. Cette liaison est réalisée par le matériau composant la bande de roulement. Ainsi, il est possible d'augmenter très sensiblement la longueur des arêtes après usure partielle tout en obtenant une rigidité d'ensemble des éléments de relief qui soit appropriée pour obtenir des performances améliorées du pneu en roulage et cela que le pneu soit neuf ou qu'il soit partiellement usé.

Selon une variante de l'invention, la bande de roulement selon l'invention est telle que chaque deuxième portion comprend au moins une incision formée dans le prolongement de l'incision s'étendant sur la profondeur H1 à partir de la surface de roulement de la bande de roulement à l'état neuf, cette au moins une incision étant disjointe des incisions de toute première portion. Par disjointe, il faut comprendre qu'il existe au moins une liaison mécanique reliant les prolongements dans la direction de la profondeur de la bande sur la hauteur H2 des parties d'élément de relief disjointes l'une de l'autre entre la surface de roulement et la profondeur H1. Dans cette variante, une deuxième portion peut comprendre une pluralité d'incisions, ces dernières n'étant pas reliées aux incisions des premières portions afin de créer une continuité de la matière et ainsi des ponts de liaison entre les parties de la bande situées de part et d'autre de l'incision sur la hauteur H2 de la deuxième partie.

De façon préférentielle, pour cette dernière variante la bande de roulement est telle que chaque deuxième portion comprend une incision unique formée dans le prolongement de l'incision s'étendant sur la profondeur H1. Dans le prolongement, n'implique pas ici nécessairement que l'inclinaison de cette incision unique par rapport à la surface de roulement soit la même que celle de l'incision de la première partie.

Selon une variante de l'invention l'incision unique de chaque deuxième portion a un fond formé par ses points les plus à l'intérieur de la bande et tout point dudit fond de l'incision unique est situé à une distance minimale A non nulle des branches des premières portions. Cette distance minimale A est une mesure de la liaison mécanique établie entre les parties de la bande situées de part et d'autre de l'incision.

De façon préférentielle, cette distance minimale A est au moins égale à 20% de la distance maximale D1 mesurant la distance maximale entre les incisions des premières portions d'incision.

Selon une autre variante intéressante de l'invention, l'incision unique formée sur une deuxième portion et dans le prolongement de la première partie d'incision a une longueur L2 mesurée dans la direction principale de l'incision telle qu'au moins une partie de cette incision unique est intercalée entre deux incisions d'une première portion sur une longueur de recouvrement B non nulle et au plus égale à 50% de la longueur L1 de chaque première portion, chaque première portion ayant une même longueur L1.

L'intérêt d'une telle disposition est d'augmenter la longueur d'arêtes après usure partielle lorsque la longueur de recouvrement B est non nulle. Une limite supérieure est fixée à 50% de la longueur L1 de chaque première portion pour que la liaison mécanique recherchée soit effective.

Selon une autre variante de l'invention, chaque deuxième portion est dépourvue d'incision et chaque première portion comprend au moins trois incisions, une desdites incision étant distante d'au moins deux autres incisions situées de part et d'autre d'une distance minimale A au moins égale à 20% de la distance D1. Dans une variante de cette réalisation, l'une des incisions est à égale distance des deux autres incisions.

De façon avantageuse et cela quelle que soit la variante précédemment décrite, une incision selon l'invention est telle que sa longueur totale d'arêtes formées après usure partielle (c'est-à-dire après une usure supérieure à la profondeur de la première partie H1) est au moins égale à 1.5 fois la longueur des arêtes formées sur la bande de roulement à l'état neuf par la même incision.

De façon préférentielle, la distance séparant deux premières portions d'incision est au moins égale à 50% de la longueur L1 de chaque première portion, dans le cas où les premières portions ont la même longueur ou sensiblement la même longueur.

De façon avantageuse, la distance L2 entre deux premières portions d'incision est au moins égale à 50% de la longueur L1 de chaque première portion, chaque première portion ayant une même longueur L1.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue d'un élément de relief d'une bande de roulement selon l'invention ;
La figure 2 montre une vue d'une face latérale de l'élément de relief représenté à la figure 1 ;
La figure 3A représente une vue d'un élément moulant adapté pour mouler une incision telle que représentée avec les figures 1 et 2 ;
La figure 3B montre la trace sur la bande de roulement de l'incision obtenue avec l'élément moulant de la figure 3A à l'état neuf ;
La figure 3C montre les traces sur la bande de roulement de l'incision obtenue avec l'élément moulant de la figure 3A à un état usé partiel ;
La figure 4A représente une vue d'un d'élément moulant adapté pour mouler une deuxième variante d'incision selon l'invention ;
La figure 4B montre les traces sur la bande de roulement de cette deuxième variante d'incision après usure partielle ;
La figure 5A représente une vue d'un d'élément moulant adapté pour mouler une troisième variante d'incision selon l'invention ;
La figure 5B montre les traces sur la bande de roulement de la troisième variante d'incision après usure partielle ;
La figure 6 montre une coupe d'élément de relief comportant une quatrième variante d'incision selon l'invention ;
La figure 7A représente une vue d'un d'élément moulant adapté pour mouler une cinquième variante d'incision selon l'invention ;
La figure 7B montre les traces sur la bande de roulement de la cinquième variante d'incision à l'état neuf ;
La figure 7C montre les traces sur la bande de roulement de la cinquième variante d'incision après usure partielle.

### DESCRIPTION DES FIGURES

Pour les figures accompagnant cette description, des mêmes signes de référence sont employés pour décrire des variantes de l'invention dès lors que ces signes de référence renvoient à des éléments d'une même nature, que cette nature soit structurelle ou bien fonctionnelle.

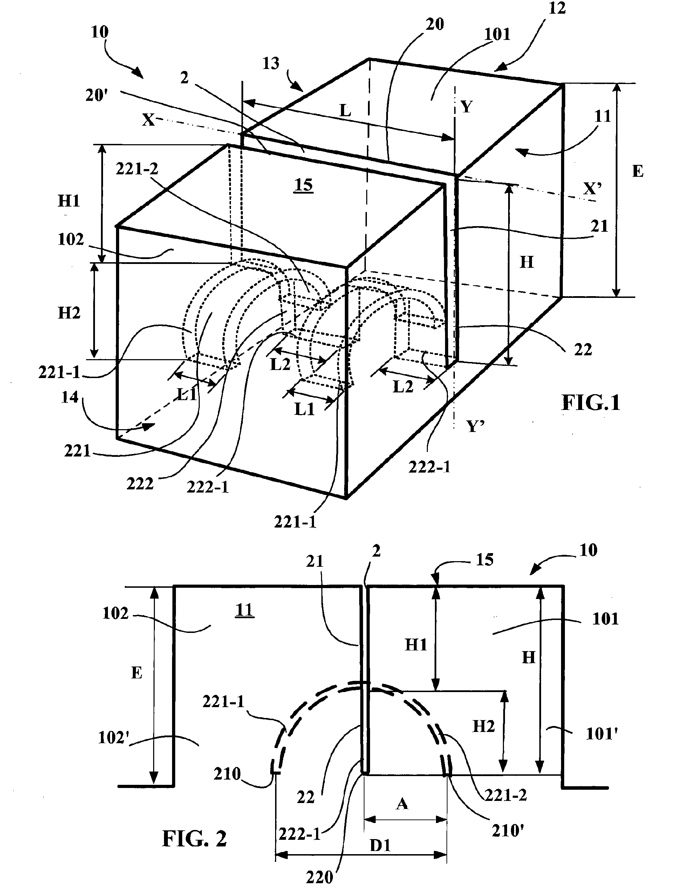

La figure 1 montre un élément de relief 10 d'une bande de roulement en matériau caoutchouc pour pneu, cet élément de relief 10 étant délimité par quatre rainures. Cet élément en forme de bloc 10 comprend quatre faces latérales 11, 12, 13, 14 et une face de contact 15 destinée à venir en contact avec une surface de roulage. Chaque face latérale coupe la face de contact pour former des arêtes. La bande de roulement a une épaisseur E correspondant ici à la profondeur des rainures délimitant le bloc.

Ce bloc 10 est pourvu d'une incision 2 conforme à la présente invention qui s'ouvre sur deux des faces latérales 11, 13 et sur la face de contact 15 ; cette incision a une profondeur maximale H au plus égale à l'épaisseur E de la bande. Cette incision 2 forme sur la face de contact deux arêtes 20, 20' en vis-à-vis de forme rectiligne. L'incision 2 s'étend sur la face de contact 15 selon une direction principale XX' déterminée comme la droite passant par les extrémités des arêtes formées par l'incision sur la face de contact à l'état neuf ; l'incision 2 s'étend dans l'épaisseur de la bande selon une direction secondaire perpendiculaire à la face de contact (repérée par la direction YY').

Cette incision est constituée par une première partie 21 et une seconde partie 22, la première partie d'incision 21 s'étendant selon la direction secondaire YY' entre la face de contact 15 à l'état neuf et une profondeur H1 ici égale à 50% de la profondeur maximale H de l'incision et la seconde partie d'incision 22 prolongeant la première partie dans l'épaisseur de la bande. Cette seconde partie 22 s'étend sur une profondeur H2 qui est dans le cas présent sensiblement égale à H1.

La première partie d'incision 21, de longueur totale L mesurée sur la surface de roulement à l'état neuf de la bande dans la direction principale, divise le bloc, à partir de la face de contact et sur la profondeur H1, en deux parties de bloc 101, 102 disjointes l'une de l'autre.

En outre, la seconde partie d'incision 22 comprend, dans une direction parallèle à la direction principale XX' de l'incision 2, des premières portions 221 de longueur L1 et des deuxièmes portions 222 de longueur L2, ces premières et deuxièmes portions étant chacune de longueur inférieure à la longueur L. Dans le cas présent, les longueurs L1 et L2 sont égales au quart de la longueur initiale totale L de l'incision.

Chaque première portion 221 est formée d'une paire d'incisions 221-1, 221-2 disjointes l'une de l'autre, ces deux branches étant espacées l'une de l'autre d'une distance maximale D1 à l'une de leurs extrémités.

En outre, chaque deuxième portion 222 comprend une incision unique 222-1 formée dans le prolongement dans la direction secondaire y-y' de la première partie 21 de l'incision ; cette incision unique 222-1 a la même inclinaison que la première partie 21 d'incision. Une deuxième portion 222 est intercalée entre les deux premières portions 221 dans la direction principale XX' de l'incision et une autre deuxième portion 222 est disposée de manière à déboucher sur une face latérale de l'élément de relief 10.

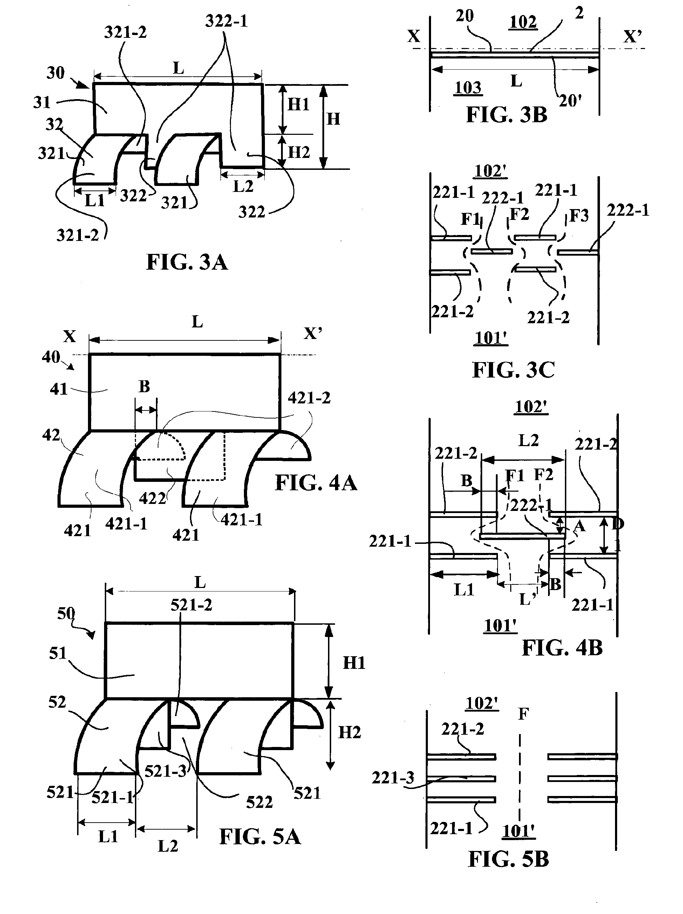

L'incision unique 222-1 de chaque deuxième portion 222 est disjointe de toutes les incisions 221-1, 221-2 des premières portions 221. Par disjointe, on entend ici que la distance minimale A entre tout point de cette incision unique 222-1 et tout point des extrémités des incisions des premières portions est au moins égale à 20% de la distance maximale D1 entre les extrémités des branches des incisions 221-1, 221-2 des premières portions. Dans le cas présent, l'incision unique 222-1 est formée pour que ses extrémités 220 soient à une distance égale à 50% de D1 par rapport aux extrémités 210, 210' des incisions des premières parties. Dans le cas présenté, il n'y a pas de recouvrement dans la direction principale x-x' de l'incision entre les incisions 221-1, 221-2 des premières portions et les incisions 222-1 des deuxièmes portions. Cette caractéristique est visible sur la figure 3C qui montre les traces des incisions sur la surface de roulement après usure partielle.

Entre la surface de roulement à l'état neuf et la profondeur H1, l'incision génère deux parties de bloc 101, 102 qui sont disjointes l'une de l'autre.

Dans cet exemple, on voit que les discontinuités entre les incisions 221-1, 221-2 des premières portions 221 et les incisions 222-1 des deuxièmes portions 222 conduit à la formation de liaisons mécaniques entre les parties du bloc situées de chaque côté de l'incision. À partir d'une profondeur au moins égale à H1, il est possible d'établir une continuité entre la matière située d'un côté et celle située de l'autre côté ; grâce à cette continuité, il est possible d'ajuster la rigidité de l'élément de sculpture de la bande tout en augmentant la longueur d'arêtes après usure partielle.

Sur la figure 2, on montre une vue d'une face latérale 11 du bloc de la figure 1. On voit que l'incision 2 de profondeur totale H inférieure à la hauteur E du bloc comprend une première partie 21 de profondeur H1 s'ouvrant sur la face de contact 15 et prolongée dans la direction de l'épaisseur du bloc par une deuxième partie 22 de profondeur H2.

Toutes les branches d'incisions 221-1, 221-2, 222-1 des premières portions 221 et des deuxièmes portions 222 ont des extrémités les plus à l'intérieur du bloc qui sont toutes à une même distance H de la face de contact 15 du bloc à l'état neuf. Dans une variante non montrée ici, il est possible d'avoir des profondeurs différentes pour chaque branche : dans ce cas la hauteur H2 correspond à la plus grande des hauteurs des branches.

Chaque deuxième portion de la seconde partie d'incision 22 a tous ses points de son extrémité - correspondant aux derniers points desdites deuxièmes portions à apparaître sur la surface de roulement après usure - situés à une distance A égale à 50% de la distance D1, D1 mesurant la distance maximale entre les branches d'une même première portion d'incision. Grâce à l'incision selon l'invention, il est possible d'augmenter la longueur totale d'arêtes actives sur la surface de roulement tout en limitant la réduction de rigidité, par l'établissement d'une liaison mécanique entre les parties 101', 102' situées de part et d'autre de l'incision 2.

Les figures 3A, 3B et 3C se rapportent à une même configuration d'incision correspondant à l'incision telle que montrée avec les figures 1 et 2.

La figure 3A montre, vu en perspective, un élément moulant 30 pour mouler l'incision montrée avec les figures 1 et 2. Cet élément moulant 30 comprend une première partie d'élément 31 destinée à faire saillie à la surface de moulage d'un moule de fabrication d'une bande de roulement selon l'invention, cette première partie ayant une hauteur H1 et une longueur L. Dans le prolongement de cette première partie 31, une deuxième partie d'élément 32 est formée sur une hauteur H2. Cette deuxième partie 32 comprend de façon successive, suivant la direction principale de l'élément (repérée par XX'), deux premières portions 321 d'élément moulant et deux deuxièmes portions 322 d'élément moulant, ces portions 321, 322 ayant des longueurs L1 et L2 égales. Chaque première portion 321 comprend deux lames 321-1, 321-2 s'écartant l'une de l'autre et distantes au maximum d'une distance D1. Entre les premières portions 321, il est formé une lame unique 322-1 ayant une même hauteur H2 que celle des lames 321-1, 321-2 des premières portions. Une autre deuxième portion 322 identique est formée dans la direction principale de l'incision vers l'extérieur d'une première portion 321. Toutes les parties de l'élément moulant ont sensiblement une même épaisseur égale ici à 0.6 mm.

Sur la figure 3B, on montre la trace de l'incision 2 obtenue grâce à l'élément moulant de la figure 3A à l'état neuf de la bande, c'est-à-dire sur la face de contact du bloc à l'état initial avant tout roulage. Cette trace comprend deux arêtes 20 et 20' de géométrie rectiligne selon la direction principale XX' de l'incision et ayant une longueur L.

La figure 3C montre les traces de la même incision après usure partielle de la bande de roulement supérieure à la profondeur H1. On distingue les creux 221-1 et 221-2 ou traces formés par chaque double branches d'incisions des premières portions 321 et chaque incision unique 222-1 des deuxièmes portions 322, tous ces creux ayant chacun une longueur sensiblement égale au quart de la longueur totale L de l'incision à l'état neuf. Que ce soit à l'état neuf ou après usure partielle, les largeurs des incisions sont identiques et inférieures à 1 mm (par largeur d'une incision, on entend la distance moyenne séparant les faces en vis-à-vis délimitant ladite incision). On pourrait bien entendu créer des incisions qui aient des largeurs différentes selon les régions en utilisant des lames d'épaisseurs appropriées.

On voit que des paires d'incisions 221-1, 221-2 sont formées dans chaque première portion, ces incisions étant en tout point espacées l'une de l'autre d'une distance maximale D1, et entre les premières portions, dans la direction XX', une incision unique 222-1 qui ne présente pas de zone de recouvrement avec les paires d'incisions (largeur de recouvrement est ici égale à zéro). On observe que chaque incision unique 222-1 des deuxièmes portions est à au moins une distance minimale A de toute incision 221-1, 221-2 des premières portions, cette distance A étant au moins égale à 20% de la distance D1. Dans le cas présent, la distance A est égale approximativement à 50% de la distance D1.

On voit sur la figure 3B que l'incision partage le bloc entre une partie avant 101 et une partie arrière 102, ces parties étant disjointes l'une de l'autre sur la hauteur H1 correspondant à la profondeur de la première partie de l'incision. Par contre, les prolongements 101', 102' de ces parties avant et arrière vers le fond du bloc sont mécaniquement reliés entre eux grâce à la formation de lignes continues de matière caoutchoutique, ces lignes continues étant indiquées par les lignes en traits pointillés F1, F2,F3.

Dans cette configuration, on observe que la longueur totale L d'incision à l'état neuf a augmenté très sensiblement après usure partielle révélant la deuxième partie d'incision sur la surface de roulement. La longueur totale d'arêtes après usure partielle est ici 1.5 fois la longueur initiale L.

Les figures 4A et 4B se réfèrent à une même deuxième variante de l'invention.

Cette deuxième variante d'élément moulant 40 est dérivée de la première variante et comprend une première partie 41 prolongée dans la hauteur par une deuxième partie 42. La deuxième partie 42 comprend deux premières portions 421 encadrant une deuxième portion 422 (dans ce cas des premières portions 421 s'ouvrent sur des faces latérales d'un même élément de sculpture). La différence principale avec la première variante montrée avec les figures 3A à 3C réside dans le fait que la lame unique 422 de la deuxième portion s'étend partiellement entre les lames 421 des premières portions pour former des recouvrements de longueur B (mesurée dans la direction principale XX'). La figure 4B montre la trace de l'incision moulée avec cet élément moulant 40 après usure partielle : on observe que deux paires d'incisions 221-1, 221-2 sont formées, les incisions d'une même paire étant distantes l'une de l'autre d'une distance maximale D1 et une incision unique 222-1, cette dernière ayant une longueur L2 qui est supérieure à la distance L' séparant les deux paires d'incisions 221-1, 221-2. Par ailleurs, cette incision unique 222-1 s'intercale entre les incisions 221-1, 221-2 de chaque paire sur une longueur de recouvrement B égale à 25% de la longueur L1 des incisions 221-1, 221-2 formant chaque paire.

Les figures 5A et 5B se réfèrent à une même troisième variante de l'invention. La figure 5A montre un élément moulant comprenant une première partie d'élément 51 destinée à faire saillie à la surface de moulage d'un moule de fabrication d'une bande de roulement selon l'invention. Dans le prolongement de cette première partie 51, une deuxième partie d'élément 52 est formée. Cette deuxième partie 52 comprend deux premières portions 521 d'élément moulant constituées chacune par trois lames 521-1, 521-2, 521-3, ces lames étant distantes l'une de l'autre d'une distance A. Entre les premières portions 521, une deuxième portion d'élément moulant 522 est dépourvue de toute lame afin de créer un pont de matière de grande section transversale (de largeur égale à L2 et de hauteur égale à H2). Sur la figure 5B, on voit qu'après usure partielle de la bande de roulement, il est formé deux groupes de trois incisions 221-1, 221-2, 221-3 parallèles entre elles et de même longueur. Il est ainsi formé un pont de matière entre les parties du bloc situées de chaque côté de l'incision (ce pont est signalé par une ligne F en traits pointillés). À partir de la profondeur H1 correspondant à l'apparition sur la surface de roulement des trois incisions, il s'établit une continuité entre la matière située d'un côté et celle située de l'autre côté. La personne du métier peut régler au mieux les dimensions du pont (ou des ponts dans le cas d'une pluralité de deuxièmes portions) afin d'obtenir une rigidité appropriée pour une longueur d'incision augmentée après usure partielle.

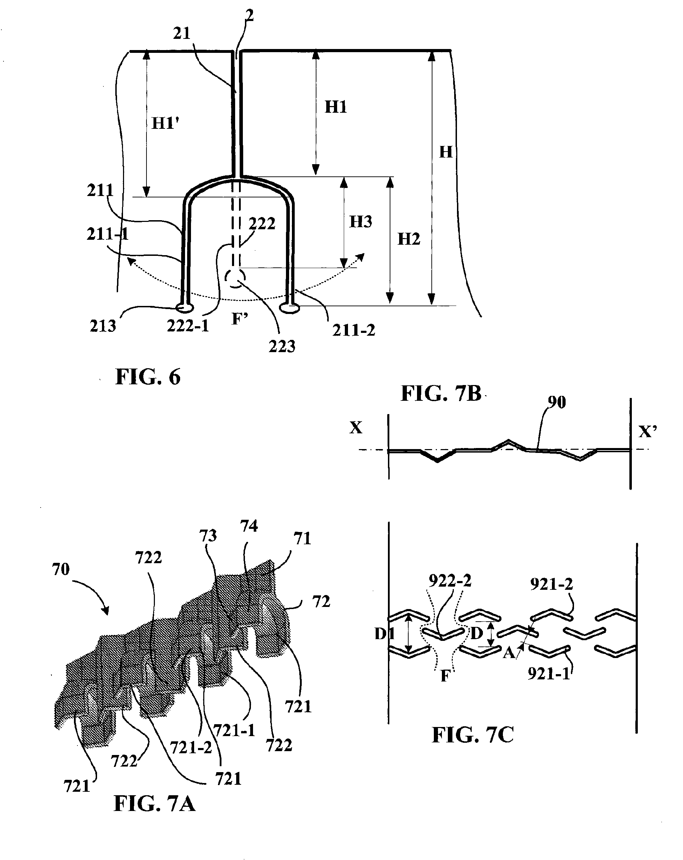

La figure 6 montre en coupe un élément de relief comprenant quatrième variante d'incision 2 selon l'invention selon laquelle la deuxième portion 222 comprend une incision unique 222-1 de moindre profondeur H3 comparativement à la profondeur H2 des incisions 221-1 et 221-2 formant les branches des premières portions 221. Cette variante permet d'augmenter la part de rigidité liée à la liaison des parties de matière situées de part et d'autre de l'incision. Outre les ponts de matière formés comme pour les incisions montrées avec les variantes précédentes, il est formé une ligne continue (repérée par la ligne en traits pointillés F') entre les parties avant et arrière respectivement 101' et 102'. En outre les extrémités les plus à l'intérieur de la bande sont pourvue de parties élargies 213, 223 afin de désensibiliser ces extrémités aux concentrations de contraintes.

La géométrie des branches des deux incisions est telle que la largeur D1 maximale est obtenue après une usure correspondant à une profondeur H1' légèrement supérieure à la profondeur H1 d'apparition des deux incisions. Cette largeur D1 est sensiblement conservée dans la profondeur jusqu'aux points des incisions les plus à l'intérieur.

Les figures 7A, 7B, 7C se réfèrent à une même cinquième variante de l'invention.

La figure 7A montre en perspective un élément moulant 70 comprenant une première partie d'élément 71 prolongée par une deuxième partie d'élément 72. La première partie d'élément 71 est constituée par une lame unique formée par une pluralité de facettes à angle pour former sur la surface de roulement à l'état neuf un tracé d'incision en zigzag comme cela est visible sur la figure 7B. Globalement cette variante s'apparente à l'incision montrée avec les figures 1 et 2 aux différences près suivantes :
- un plus grand nombre de portions à deux branches dans la deuxième partie d'incision et,
- une forme spécifique en zigzag dans la direction principale XX'.

Cette première partie 71 est prolongée par une deuxième partie 72 composée d'une succession de quatre premières portions 721 formées chacune par une paire de lames 721-1, 721-2 et de trois deuxièmes portions 722 à lame unique 722-1, chaque deuxième portion étant intercalée entre deux premières portions. Pour chaque paire de lames, chaque lame est formée avec deux facettes 73, 74 formant entre elle un angle différent de 180 degrés (dans le cas présent cet angle est de 120 degrés). Les lames d'une paire d'une même première portion sont orientées de manière à être en opposition comme cela est visible sur la figure 7C. Par ailleurs, la lame unique de chaque deuxième portion est également formée de deux facettes formant entre elles un angle différent de 180 degrés.

La figure 7B montre sur la surface de roulement de la bande de roulement à l'état neuf, le creux ou incision 90 moulé par l'élément moulant de la figure 7A. Dans la direction principale - droite passant par les points d'extrémité de ce creux - repérée par la droite XX', l'incision suit un tracé formé de parties parallèles avec cette direction principale XX' et de parties inclinées par rapport à cette direction. Ces parties inclinées sont prolongées dans la deuxième partie de l'incision par des incisions uniques de même géométrie.

La figure 7C montre les creux 921-1, 921-2, 922-1 formés sur la surface de roulement de la bande après une usure de cette dernière supérieure à la profondeur de la première partie de l'incision. On voit que l'incision s'est décomposée en plusieurs incisions 921-1, 921-2, 922-1 de tracé angulaire à deux segments formant entre eux un angle de 120 degrés, la somme des longueurs de ces incisions 921-1, 921-2, 922-1 étant très supérieure à la longueur initiale de l'incision à l'état neuf de la bande de roulement. Dans le cas présent, il n'y a pas recouvrement entre les incisions 921-1, 921-2 des premières portions et l'incision 922-1 de chaque deuxième portion.

Dans le cas présent, la distance minimale A séparant tous points de l'incision 922-1 des paires d'incisions 921-1, 921-2 est inférieure à la distance minimale D entre deux incisions d'une même paire. Dans le cas présent la distance A est sensiblement égale à la moitié de la distance D prise aux extrémités des incisions 921-1, 921-2 des premières portions. Dans le cas présent, la distance maximale D1 entre deux incisions 921-1, 921-2 des premières portions est supérieure à la distance minimale D ; ici, la distance A reste au moins égale à 20% de la distance maximale D1. Les traits pointillés indiqués par les références F montrent les ponts de matière formés pour relier les parties de matière situées de part et d'autre de l'incision 90.

L'invention ayant été décrite de manière générale et au moyen de quelques variantes, il doit être compris que cette invention n'est pas limitée à ces seules variantes décrites et représentées. Il est clair que diverses modifications peuvent y être apportées sans sortir du cadre général de la présente invention. Il est clair que tout ou partie des incisions décrites comme sensiblement perpendiculaire à la surface de roulement de la bande de roulement peuvent être inclinées avec un angle différent de 90 degrés par rapport à cette même surface.

Si tous les exemples montrés et décrits sont relatifs à des incisions s'ouvrant sur les faces latérales de l'élément de relief dans lequel l'incision selon l'invention est réalisée, il doit être compris que la protection recherchée englobe le cas d'incision de même structure mais ne s'ouvrant pas sur les faces latérales ou encore ne s'ouvrant que sur une seule face latérale.

Dans tous les cas présentés, la personne du métier est à même d'adapter la forme de chaque incision, notamment en prévoyant la présence de moyens aptes à limiter les déplacements relatifs d'une face par rapport à la face en vis-à-vis (par exemple en prévoyant la formation de relief interagissant pour limiter voire bloquer tout mouvement relatif des faces).

## Revendications

1. Bande de roulement en matériau caoutchouc pour pneu, cette bande ayant une épaisseur E et comprenant une pluralité d'éléments de relief (10) délimités par des découpures, chaque élément de relief comprenant une face de contact (15) destinée à venir en contact avec la chaussée et des faces latérales (11, 12, 13, 14) coupant cette face de contact selon des arêtes, l'ensemble des faces de contact des éléments de relief formant une surface de roulement de la bande, au moins un de ces éléments de relief (10) comprenant au moins une incision (2) de profondeur maximale (H) au plus égale à l'épaisseur (E) de la bande, cette incision (2) s'étendant selon une direction principale déterminée par les extrémités de la trace de l'incision sur la surface de roulement à l'état neuf et une direction secondaire s'étendant dans l'épaisseur de la bande, cette incision étant constituée par une première partie (21) et une seconde partie (22), la première partie (21) d'incision s'étendant selon la direction secondaire entre la face de contact (15) à l'état neuf et une profondeur (H1) au moins égale à 40% de la profondeur maximale (H) et la seconde partie (22) d'incision prolongeant la première partie (21) dans l'épaisseur de la bande, cette seconde partie (22) s'étendant sur une profondeur (H2), la première partie (21) d'incision, de longueur totale (L) mesurée sur la surface de roulement à l'état neuf de la bande dans la direction principale, divisant l'élément en relief (10) sur la profondeur (H1) en deux parties d'élément de relief (101, 102) disjointes l'une de l'autre, cette bande étant **caractérisée en ce que** :
- la seconde partie d'incision (22) comprend, dans la direction principale de l'incision, au moins une première portion (221) et au moins une deuxième portion (222), ces deux portions ayant chacune une longueur inférieure à la longueur (L),
- chaque première portion (221) étant formée d'une incision comprenant au moins deux branches (221, 221-2) disjointes les unes des autres, les extrémités de ces au moins deux branches (221-1, 221-2) étant espacées l'une de l'autre d'une distance maximale (D1), et
- chaque deuxième portion (222), située dans le prolongement d'une première portion (221) dans la direction principale de l'incision et disjointe de toute première portion, étant formée de façon à créer une liaison mécanique entre les prolongements (101', 102') dans la profondeur sur la hauteur (H2) des parties d'élément de relief disjointes (101, 102) l'une de l'autre entre la face de contact et la profondeur (H1).

2. Bande de roulement selon la revendication 1 **caractérisée en ce que** chaque deuxième portion (222) comprend au moins une incision (222-1) formée dans le prolongement de l'incision s'étendant sur la profondeur (H1) à partir de la surface de roulement de la bande de roulement à l'état neuf, cette au moins une incision étant disjointe des incisions (221-1, 221-2) de toute première portion (221).

3. Bande de roulement selon la revendication 2 **caractérisée en ce que** chaque deuxième portion (222) comprend une incision unique (222-1) formée dans le prolongement de l'incision s'étendant sur la profondeur (H1).

4. Bande de roulement selon la revendication 3 **caractérisée en ce que**, l'incision unique (222-1) de chaque deuxième portion ayant un fond formé par ses points les plus à l'intérieur de la bande, tout point du fond de l'incision unique est situé à une distance minimale (A) non nulle des branches des premières portions.

5. Bande de roulement selon la revendication 4 **caractérisée en ce que** la distance minimale (A) est au moins égale à 20% de la distance (D1).

6. Bande de roulement selon la revendication 5 **caractérisée en ce que** l'incision unique (222-1) d'une deuxième portion (222) formée dans le prolongement de la première partie d'incision a une longueur mesurée dans la direction principale de l'incision telle qu'au moins une partie de cette incision unique est intercalée entre deux incisions (221-1, 221-2) d'une première portion (221) sur une longueur de recouvrement B non nulle et au plus égale à 50% de la longueur (L1) de chaque première portion (221), chaque première portion (221) ayant une même longueur (L1).

7. Bande de roulement selon la revendication 1 **caractérisée en ce que** chaque deuxième portion (222) est dépourvue d'incision et **en ce que** chaque première portion (221) comprend au moins trois incisions, une desdites incision étant distante d'au moins deux autres incisions situées de part et d'autre d'une distance minimale (A) au moins égale à 20% de la distance (D1).

8. Bande de roulement selon l'une quelconque des revendications 1 à 7 **caractérisée en ce que** la longueur totale d'arêtes formées après usure partielle supérieure à (H1) est au moins égale à 1.5 fois la longueur d'arêtes formées sur la bande de roulement à l'état neuf par l'incision.

9. Bande de roulement selon l'une quelconque des revendications 1 à 8 **caractérisée en ce que** la distance séparant deux premières portions d'incision (221) est au moins égale à 50% de la longueur (L1) de chaque première portion (221).

10. Bande de roulement selon l'une quelconque des revendications 1 à 9 **caractérisée en ce que** la distance (L2) séparant deux premières portions (221) est au moins égale à 50% de la longueur (L1) de ces premières portions.

## Patentansprüche

1. Laufstreifen aus Kautschukmaterial für einen Reifen, wobei dieser Streifen eine Dicke E hat und eine Vielzahl von Reliefelementen (10) enthält, die von Ausschnitten begrenzt werden, wobei jedes Reliefelement eine Kontaktseite (15), die dazu bestimmt ist, mit der Straße in Kontakt zu kommen, und Seitenflächen (11, 12, 13, 14) enthält, die diese Kontaktseite entlang von Kanten schneiden, wobei die Gesamtheit der Kontaktseiten der Reliefelemente eine Lauffläche des Streifens formt, wobei mindestens eines dieser Reliefelemente (10) mindestens einen Einschnitt (2) mit einer maximalen Tiefe (H) höchstens gleich der Dicke (E) des Streifens enthält, wobei dieser Einschnitt (2) sich in einer durch die Enden der Spur des Einschnitts auf der Lauffläche im Neuzustand bestimmten Hauptrichtung und in einer Sekundärrichtung erstreckt, die sich in der Dicke des Streifens erstreckt, wobei dieser Einschnitt aus einem ersten Teil (21) und einem zweiten Teil (22) besteht, wobei der erste Einschnittsteil (21) sich in der Sekundärrichtung zwischen der Kontaktseite (15) im Neuzustand und einer Tiefe (H1) mindestens gleich 40% der maximalen Tiefe (H) erstreckt und der zweite Einschnittsteil (22) den ersten Teil (21) in der Dicke des Streifens verlängert, wobei dieser zweite Teil (22) sich über eine Tiefe (H2) erstreckt, wobei der erste Einschnittsteil (21), einer Gesamtlänge (L) gemessen auf der Lauffläche im Neuzustand des Streifens in der Hauptrichtung, das Reliefelement (10) über die Tiefe (H1) in zwei voneinander getrennte Reliefelementteile (101, 102) teilt, wobei dieser Streifen **dadurch gekennzeichnet ist, dass**:
- der zweite Einschnittsteil (22) in der Hauptrichtung des Einschnitts mindestens einen ersten Abschnitt (221) und mindestens einen zweiten Abschnitt (222) enthält, wobei diese zwei Abschnitte je eine Länge geringer als die Länge (L) haben,
- wobei jeder erste Abschnitt (221) von einem Einschnitt geformt wird, der mindestens zwei voneinander getrennte Arme (221-1, 221-2) enthält, wobei die Enden dieser mindestens zwei Arme (221-1, 221-2) einen maximalen Abstand (D1) zueinander haben, und
- jeder zweite Abschnitt (222), der sich in der Verlängerung eines ersten Abschnitts (221) in der Hauptrichtung des Einschnitts befindet und von jedem ersten Abschnitt getrennt ist, so geformt wird, dass eine mechanische Verbindung zwischen den Verlängerungen (101', 102') in der Tiefe über die Höhe (H2) der zwischen der Kontaktseite und der Tiefe (H1) voneinander getrennten Reliefelementteile (101, 102) erzeugt wird.

2. Laufstreifen nach Anspruch 1, **dadurch gekennzeichnet, dass** jeder zweite Abschnitt (222) mindestens einen Einschnitt (222-1) enthält, der in der Verlängerung des Einschnitts geformt ist, der sich über die Tiefe (H1) ausgehend von der Lauffläche des Laufstreifens im Neuzustand erstreckt, wobei dieser mindestens eine Einschnitt von den Einschnitten (221-1, 221-2) jedes ersten Abschnitts (221) getrennt ist.

3. Laufstreifen nach Anspruch 2, **dadurch gekennzeichnet, dass** jeder zweite Abschnitt (222) einen einzigen Einschnitt (222-1) enthält, der in der Verlängerung des Einschnitts geformt ist, der sich über die Tiefe (H1) erstreckt.

4. Laufstreifen nach Anspruch 3, **dadurch gekennzeichnet, dass**, da der einzige Einschnitt (222-1) jedes zweiten Abschnitts einen Boden aufweist, der von seinen am weitesten im Inneren des Streifens liegenden Punkten geformt wird, jeder Punkt des Bodens des einzigen Einschnitts sich in einem Mindestabstand (A) ungleich Null von den Armen der ersten Abschnitte befindet.

5. Laufstreifen nach Anspruch 4, **dadurch gekennzeichnet, dass** der Mindestabstand (A) mindestens gleich 20% des Abstands (D1) ist.

6. Laufstreifen nach Anspruch 5, **dadurch gekennzeichnet, dass** der einzige Einschnitt (222-1) eines zweiten Abschnitts (222), der in der Verlängerung des ersten Einschnittsteils geformt ist, eine derartige in der Hauptrichtung des Einschnitts gemessene Länge hat, dass mindestens ein Teil dieses einzigen Einschnitts zwischen zwei Einschnitte (221-1, 221-2) eines ersten Abschnitts (221) über eine Abdeckungslänge B ungleich Null und höchstens gleich 50% der Länge (L1) jedes ersten Abschnitts (221) eingefügt ist, wobei jeder erste Abschnitt (221) die gleiche Länge (L1) hat.

7. Laufstreifen nach Anspruch 1, **dadurch gekennzeichnet, dass** jeder zweite Abschnitt (222) keinen Einschnitt aufweist, und dass jeder erste Abschnitt (221) mindestens drei Einschnitte enthält, wobei einer der Einschnitte von mindestens zwei anderen Einschnitten, die sich zu beiden Seiten befinden, um einen Mindestabstand (A) mindestens gleich 20% des Abstand (D1) entfernt ist.

8. Laufstreifen nach einem der Ansprüche 1 bis 7, **dadurch gekennzeichnet, dass** die Gesamtlänge von nach einer Teilabnutzung von mehr als (H1) geformten Kanten mindestens gleich dem Anderthalbfachen der Länge von Kanten ist, die auf dem Laufstreifen im Neuzustand vom Einschnitt geformt werden.

9. Laufstreifen nach einem der Ansprüche 1 bis 8, **dadurch gekennzeichnet, dass** der zwei erste Einschnittsabschnitte (221) trennende Abstand mindestens gleich 50% der Länge (L1) jedes ersten Abschnitts (221) ist.

10. Laufstreifen nach einem der Ansprüche 1 bis 9, **dadurch gekennzeichnet, dass** der zwei erste Abschnitte (221) trennende Abstand (L2) mindestens gleich 50% der Länge (L1) dieser ersten Abschnitte ist.

## Claims

1. Tread made of a rubber compound for a tyre, this tread having a thickness E and comprising a plurality of raised elements (10) delimited by cuts, each raised element comprising a contact face (15) intended to come into contact with the road surface and lateral faces (11, 12, 13, 14) intersecting this contact face along edge corners, the collection of contact faces of the raised elements forming a tread surface of the tread, at least one of these raised elements (10) comprising at least one sipe (2) of a maximum depth (H) at most equal to the thickness (E) of the tread, this sipe (2) running in a main direction determined by the ends of the line of the sipe on the tread surface in the as-new condition and a secondary direction running into the thickness of the tread, this sipe being made up of a first part (21) and a second part (22), the sipe first part (21) running in the secondary direction between the contact face (15) in the as-new condition and a depth (H1) at least equal to 40% of the maximum depth (H) and the sipe second part (22) extending the first part (21) into the thickness of the tread, this second part (22) extending over a depth (H2), the sipe first part (21), of total length (L) measured on the tread surface when the tread is in the as-new condition in the main direction, dividing the raised element (10) over the depth (H1) into two raised-element parts (101, 102) which are disjointed from one another, this tread being **characterized in that**:
- the sipe second part (22) comprises, in the main direction of the sipe, at least one first portion (221) and at least one second portion (222), these two portions each having a length less than the length (L),
- each first portion (221) being formed of a sipe comprising at least two branches (51, 52) disjointed from one another, these at least two branches (51, 52) being spaced from one another by a maximum distance (D1), and
- each second portion (222), situated in the extension of a first portion (221) in the main direction of the sipe and disjointed from any first portion, being formed in such a way as to create a mechanical connection between the extensions (101', 102') into the depth over the height (H2) of the raised-element parts (101, 102) that are disjointed from one another between the contact face and the depth (H1).

2. Tread according to Claim 1, **characterized in that** each second portion (222) comprises at least one sipe (222-1) formed in the extension of the sipe extending over the depth (H1) from the tread surface of the tread in the as-new condition, this at least one sipe being disjointed from the sipes (221-1, 221-2) of any first portion (221).

3. Tread according to Claim 2, **characterized in that** each second portion (222) comprises a single sipe (222-1) formed in the extension of the sipe extending over the depth (H1).

4. Tread according to Claim 3, **characterized in that**, with the single sipe (222-1) of each second portion having a bottom formed by its points furthest towards the interior of the tread, any point on the bottom of the single sipe is situated a non-zero minimum distance (A) away from the branches of the first portions.

5. Tread according to Claim 4, **characterized in that** the minimum distance (A) is at least equal to 20% of the distance (D1).

6. Tread according to Claim 5, **characterized in that** the single sipe (222-1) of a second portion (222) formed in the extension of the sipe first part has a length measured in the main direction of the sipe, that is such that at least part of this single sipe is interposed between two sipes (221-1, 221-2) of a first portion (221) over a non-zero length of overlap B at most equal to 50% of the length (L1) of each first portion (221), each first portion (221) having the same length (L1).

7. Tread according to Claim 1, **characterized in that** each second portion (222) has no sipe and **in that** each first portion (221) comprises at least three sipes, one of the said sipes being distant from at least two other sipes situated on either side of it by a minimum distance (A) at least equal to 20% of the distance (D1).

8. Tread according to any one of Claims 1 to 7, **characterized in that** the total length of edge corners formed after partial wear beyond (H1) is at least equal to 1.5 times the length of edge corners formed by the sipe on the tread in the as-new condition.

9. Tread according to any one of Claims 1 to 8, **characterized in that** the distance separating two sipe first portions (221) is at least equal to 50% of the length (L1) of each first portion (221).

10. Tread according to any one of Claims 1 to 9, **characterized in that** the distance (L2) separating two first portions (221) is at least equal to 50% of the length (L1) of these first portions.
